# FASCICULE DE BREVET EUROPEEN

(11) **EP 4 045 396 B1**
(45) Date de publication et mention de la délivrance du brevet: **18.12.2024**
(21) Numéro de dépôt: 20790263.6
(22) Date de dépôt: 12.10.2020
(51) Int. Cl.: B64C 1/14, E06B 3/00

(54) **VITRAGE MONTE SUR UNE STRUCTURE PAR DES POINTS DE FIXATION DONT UN AU MOINS EST EXEMPT DE JEU PAR RAPPORT AU VITRAGE OU A UN CADRE DE PINCEMENT DE CELUI-CI**
VERGLASUNGSEINHEIT, DIE AUF EINER STRUKTUR DURCH BEFESTIGUNGSPUNKTE MONTIERT IST, VON DENEN MINDESTENS EINER GEGENÜBER DER VERGLASUNGSEINHEIT ODER EINEM GREIFERRAHMEN SPIELFREI IST
GLAZING UNIT MOUNTED ON A STRUCTURE BY FASTENING POINTS, AT LEAST ONE OF WHICH IS PLAY-FREE WITH RESPECT TO THE GLAZING UNIT OR TO A GRIPPING FRAME THEREOF

(30) Priorité: 14.10.2019 FR 1911415
(43) Date de publication de la demande: 24.08.2022
(73) Titulaire: Saint-Gobain Glass France, 92400 Courbevoie (FR)
(72) Inventeur: MAYEUX, Jean-Benoît, 45800 SAINT JEAN DE BRAYE (FR); FREMY, Flavien, BROOKLINE, MA 02446 (US)
(74) Mandataire: Saint-Gobain Recherche
(86) Numéro de dépôt international: PCT/EP2020/078588
(87) Numéro de publication internationale: WO 2021/074069

(56) Documents cités:
- WO-A1-2014/183611
- DE-A1- 19 642 175
- FR-A1- 2 939 104
- FR-A1- 3 039 128
- US-A1- 2012 228 428
- US-A1- 2014 363 254

## Description

L'invention se rapporte au domaine des vitrages boulonnés de véhicules (terrestre, aquatique ou aérien) soumis à des pressions (statiques ou dynamiques) pouvant présenter un risque de flambement. Une pression statique fait ici référence à une pression exercée sur la face extérieure du vitrage d'un aéronef, par exemple, à vitesse non nulle constante, et une pression dynamique à une pression exercée sur la face extérieure du vitrage d'un aéronef dont la vitesse varie. Le flambement est défini comme une inversion de courbure du vitrage, en général vers l'intérieur (ou la cabine) de l'avion sous l'effet d'une charge telle que la pression aérodynamique. Les pressions aérodynamiques de l'extérieur vers l'intérieur étant faibles, inférieures à 0,1 bar, par rapport au niveau de pressurisation cabine supérieur à 0,6 bar, le phénomène de flambement ne concerne pas les vitrages d'aéronef pressurisé.

Actuellement, les vitrages sont boulonnés directement ou par l'intermédiaire d'un cadre de pincement du vitrage, sur ou à travers la structure de montage (carlingue d'avion,...) de sorte à maintenir le vitrage solidaire de celle-ci. Les vis viennent maintenir en appuis le vitrage sur la structure. Les points de fixation peuvent être nombreux, par exemple d'un nombre supérieur à 80 pour un vitrage de 1,2 m² : cela impose de monter les vis avec un jeu sur le vitrage ou le cadre de pincement de celui-ci, pour que les trous dans ce vitrage ou dans ce cadre soient en face de ceux correspondants dans la structure, pour les boulons serrés en dernier lieu.

L'arrêt en translation du vitrage se fait par frottement (sous la tête de vis), et le rotulage sollicite le corps de la vis elle-même.

Pour se prémunir du risque de flambement, les possibilités sont d'épaissir le transparent et/ou le cadre pour augmenter la raideur du vitrage, et/ou de multiplier le nombre de points de fixation pour rigidifier les conditions aux limites.

Ces possibilités posent plusieurs problèmes, d'importance variable selon les domaines (terrestre / aérien), qui sont les suivants :
- augmentation importante du poids : épaissir le transparent et augmenter le nombre de fixations impacte directement le poids du vitrage ; c'est particulièrement problématique dans les applications aéronautiques ;
- augmentation du temps de montage: augmenter le nombre de fixations signifie un temps de remplacement plus long et plus coûteux (en temps et en composants) ; par ailleurs, multiplier le nombre de points de fixation augmente la complexité du serrage (ordre) et la répétabilité des conditions aux limites ;
- affaiblissement de la résistance au bord : les perçages sont des zones de concentration de contraintes importantes ; augmenter le nombre de perçages signifie augmenter les contraintes ; par ailleurs, un transparent plus épais (plus raide) transmettra davantage de contraintes aux attachements en cas de choc (oiseau, piéton, animal, projectile...) : le bord de la structure de montage et le bord du vitrage (cadre) devront être dimensionnés en conséquence (plus lourd).

D'autre part, le document US 2012/228428 A1 décrit un vitrage boulonné au moyen d'une douille montée sur une structure.

L'invention consiste à définir des points de fixation spécifiques (fixation rigide), combinant la fonction traditionnelle de maintien en appui du vitrage sur la structure avec des fonctions anti-translation et anti-rotulage pour rigidifier localement les conditions aux limites.

A cet effet, l'invention est exposée dans le jeu de revendications joint.

Un vitrage monolithique consiste en une unique feuille transparente en verre minéral tel que sodocalcique, aluminosilicate, borosilicate..., éventuellement trempée thermiquement ou renforcée chimiquement, ou en matériau polymère tel que poly(méthacrylate de méthyle) (PMMA), polycarbonate (PC), polyuréthane (PU), résine ionomère...

Un vitrage feuilleté est constitué de plusieurs telles feuilles transparentes en verre minéral ou en matériau polymère collées deux à deux par une couche adhésive intercalaire en polyvinylbutyral (PVB), polyuréthane thermoplastique (TPU), éthylène-acétate de vinyle (EVA)...

Quand une douille est employée, elle est insérée sans jeu dans un trou correspondant du vitrage ou du cadre de pincement de celui-ci. La vis d'un boulon concentrique à la douille peut être insérée dans celle-ci, ou au contraire, la douille est indépendante de toute vis, de tout ensemble vis-écrou (boulon). La douille, comme le pion, est également insérée sans jeu dans un trou correspondant de la structure de montage, éventuellement en traversant la structure.

Les points de fixation rigides (sans jeu) sont spécialement définis (quantité et position) en fonction des paramètres du cas d'emploi (dimension/forme/épaisseur du vitrage, rigidité structure, répartition de la pression, matériaux mis en œuvre...) pour éviter tout hyper-statisme et conserver la montabilité du produit sans contraintes. Le nombre des douilles et pions, le passage d'une vis ou non dans une douille, les formes des douilles et pions utilisés (vues plus en détails ci-dessous), la présence ou non d'un épaulement sur les douilles/pions, et l'utilisation conjointe de douilles et/ou de pions différents seront aussi adaptés en fonction de ces paramètres du cas d'emploi.

Les points de fixation rigides conformes à l'invention sont intéressants pour les vitrages soumis à des pressions susceptibles de provoquer du flambement et dont on souhaite limiter la masse et/ou faciliter la mise en oeuvre, le montage et/ou le remplacement.

L'invention permet, en combinant quelques points de fixation rigides dans les parties de la périphérie du vitrage les moins raides, où le flambement est susceptible de naître, à des points de fixation connus, avec du jeu, de diminuer le nombre total de points de fixation du vitrage sans modifier son comportement vis-à-vis du flambement, ou de maintenir le nombre total de points de fixation en diminuant ou supprimant le flambement.

De préférence, ladite douille ou ledit pion est constitué(e) d'un matériau rigide résistant mécaniquement tel que métallique ou composite comprenant des charges et/ou fibres de renforcement.

De préférence, une douille au moins a une géométrie de section de tube cylindrique.

De préférence, un pion au moins est cylindrique et plein.

Conformément à l'invention, un pion au moins est conique et plein.

De préférence, une douille au moins ou un pion au moins présente un épaulement, notamment d'appui et arrêt contre la surface de ladite structure.

Un autre objet de l'invention consiste en l'application d'un ensemble tel que défini dans les revendications 1 à 5, dans laquelle le vitrage est soumis à des pressions statiques ou dynamiques, en particulier dans laquelle le vitrage est un vitrage aéronautique, notamment un vitrage d'avion ou d'hélicoptère.

Les dessins annexés illustrent l'invention. Les figures sont des représentations schématiques en coupe de vitrages soumis à des pressions statiques et/ou dynamiques, notamment d'avion, montés sur une structure.
[Fig. 1] et [Fig. 2] représentent des vitrages connus au repos.
[Fig. 3] et [Fig. 4] représentent des vitrages connus en position de flambement.
[Fig. 5] et [Fig. 6] représentent un premier type connu de solution au problème du flambement.
[Fig. 7] et [Fig. 8] sont des représentations partielles d'un ensemble conforme à une réalisation optionnelle.
[Fig. 9] est également une représentation partielle d'un ensemble conforme à une réalisation optionnelle, tandis que [Fig. 10] représente la partie de l'ensemble conforme à l'invention elle-même.

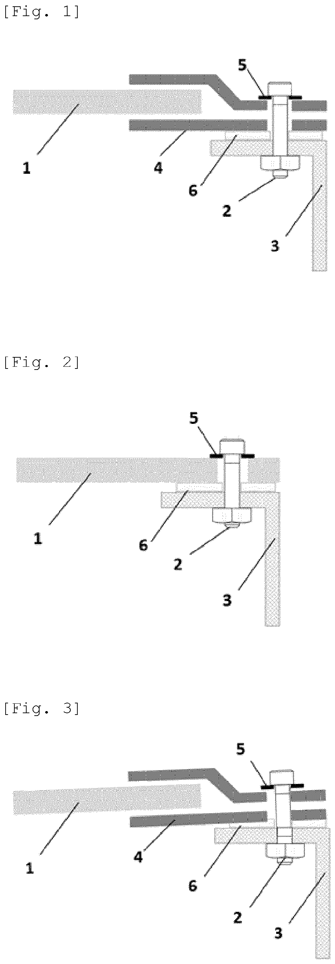

En référence à la Figure 1, un vitrage 1 d'avion est pincé par un cadre 4 boulonné sur une structure 3 (carlingue) au moyen d'un boulon 2 constitué d'une vis et d'un écrou. Une rondelle 5 sépare la tête de vis de la moitié supérieure du cadre 4 de pincement du vitrage 1. Un joint d'étanchéité 6 à l'eau et à l'air sépare la moitié inférieure du cadre 4 et la structure 3.

Eu égard au nombre important de points de fixation par boulonnage du vitrage d'avion 1, la vis du boulon 2 est insérée avec du jeu dans le trou du cadre 4, afin que les trous du cadre 4 coïncident avec les trous correspondants de la structure 3, jusqu'à la fin du boulonnage, c'est-à-dire y compris pour les boulons serrés en dernier lieu.

La Figure 2 diffère de la Figure 1 par l'absence d'un cadre 4 intermédiaire, le vitrage 1 étant cette fois lui-même muni d'un trou et boulonné directement sur et à travers la carlingue 3. La vis du boulon 2 est, pour les mêmes raisons qu'à la Figure 1, insérée avec du jeu dans le trou du vitrage 1.

Les vitrages montés des Figures 1, respectivement 2, sont représentés en condition de flambement, sur les Figures 3, respectivement 4. L'arrêt en translation se fait par frottement sous la tête de vis du cadre 4, respectivement du vitrage 1. Le rotulage sollicite le corps de la vis elle-même.

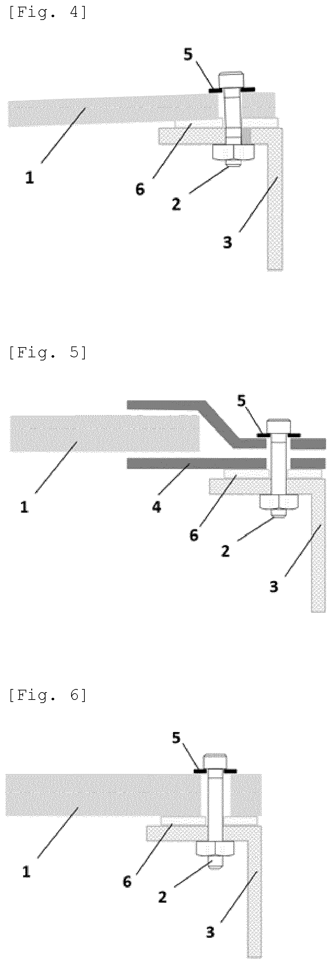

Pour limiter (diminuer, supprimer) le flambement, les vitrages montés des Figures 1, respectivement 2, peuvent être modifiés en les épaississant comme représenté sur les Figures 5, respectivement 6. L'alourdissement qui en résulte est à l'évidence défavorable, surtout dans une application aéronautique.

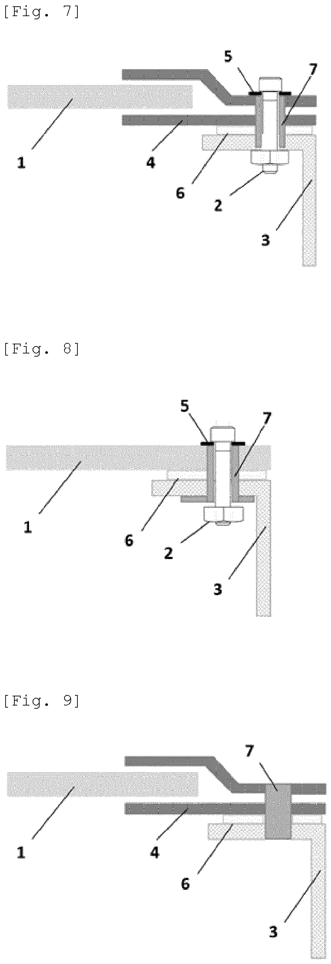

Conformément à une première réalisation optionnelle de l'invention, les vitrages montés des Figures 1, respectivement 2, ont un ou plusieurs (non la totalité, en général une minorité, un nombre limité de) points de fixation par boulonnage modifié(s) comme représenté sur les Figures 7, respectivement 8. Une douille 7 est insérée sans aucun jeu dans le trou du cadre 4 ou du vitrage 1 d'une part, de la carlingue 3 d'autre part. La vis d'un boulon 2 peut être insérée dans la douille 7 comme représenté sur les Figures 7 et 8, mais peut tout aussi bien ne pas l'être.

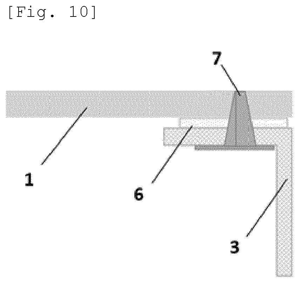

Selon une deuxième réalisation optionnelle de l'invention, les vitrages montés des Figures 1, respectivement 2, ont un ou plusieurs (non la totalité, en général une minorité, un nombre limité de) points de fixation par boulonnage modifié (s) comme représenté sur la Figure 9, et, selon la réalisation de l'invention, comme représenté sur la Figure 10. Un pion 7 (plein) cylindrique, respectivement conique, est inséré sans aucun jeu dans le trou du cadre 4, respectivement du vitrage 1. Ce dernier est donc conique.

La douille 7 de la Figure 8 comme le pion 7 de la Figure 10 présente un épaulement d'appui et d'arrêt contre la surface inférieure de la carlingue 3.

Conformément à l'invention, la modification d'un nombre limité de points de fixation par boulonnage selon ces Figures 7, 8, 9 et 10, dans les parties de la périphérie du vitrage de moindre rigidité, parties où prend naissance le flambement, suffit à diminuer/supprimer le flambement.

## Revendications

1. Ensemble constitué d'un vitrage monolithique ou feuilleté (1), d'une structure (3) et optionnellement d'un cadre (4), le vitrage (1) étant boulonné à travers la structure ou optionnellement pincé par le cadre (4) lui-même boulonné à travers la structure (3), dans lequel dans une partie au moins de la périphérie du vitrage de souplesse maximale ou de raideur minimale vis-à-vis du phénomène de flambement, ledit boulonnage est réalisé par l'insertion d'au moins un pion (7), et optionnellement au moyen d'au moins un boulon (2) inséré dans une douille (7) concentrique au boulon (2), et optionnellement par l'insertion d'au moins une douille (7), chaque douille (7) et chaque pion (7) étant monté(e) sans jeu à travers le vitrage (1) ou à travers le cadre (4), et sans jeu à travers la structure (3), au moins un dudit au moins un pion (7) étant conique et plein.

2. Ensemble selon la revendication 1, **caractérisé en ce que** ladite au moins une douille (7) ou ledit au moins un pion (7) est constitué(e) d'un matériau rigide résistant mécaniquement tel que métallique ou composite comprenant des charges et/ou fibres de renforcement.

3. Ensemble selon l'une des revendications précédentes, **caractérisé en ce qu'**une douille (7) au moins a une géométrie de section de tube cylindrique.

4. Ensemble selon l'une des revendications précédentes, **caractérisé en ce qu'**un pion (7) au moins est cylindrique et plein.

5. Ensemble selon l'une des revendications précédentes, **caractérisé en ce qu'**une douille (7) au moins ou un pion (7) au moins présente un épaulement, notamment d'appui et arrêt contre la surface de la structure (3).

6. Application d'un ensemble selon l'une des revendications précédentes, dans laquelle le vitrage est soumis à des pressions statiques ou dynamiques.

7. Application d'un ensemble selon la revendication 6, dans laquelle le vitrage est un vitrage aéronautique, notamment un vitrage d'avion ou d'hélicoptère.

## Patentansprüche

1. Anordnung, bestehend aus einer monolithischen oder laminierten Verglasung (1), einer Struktur und optional einem Rahmen (4), wobei die Verglasung (1) durch die Struktur verschraubt ist oder optional durch den Rahmen (4) eingeklemmt ist, der selbst durch die Struktur (3) verschraubt ist, wobei die Verschraubung in mindestens einem Teil des Umfangs der Verglasung mit maximaler Flexibilität oder minimaler Steifigkeit in Bezug auf das Knickphänomen durch das Einsetzen mindestens eines Stifts (7) und optional mittels mindestens einer Schraube (2), die in eine Hülse (7) eingesetzt wird, die konzentrisch zu der Schraube (2) ist, und optional durch das Einsetzen mindestens einer Hülse (7) erfolgt, wobei jede Hülse (7) und jeder Stift (7) spielfrei durch die Verglasung (1) oder durch den Rahmen (4) und ohne Spiel durch die Struktur (3) angebracht ist/sind, wobei mindestens einer des mindestens einen Stifts (7) konisch und massiv ist.

2. Anordnung nach Anspruch 1, **dadurch gekennzeichnet, dass** die mindestens eine Hülse (7) oder der mindestens eine Stift (7) aus einem starren, mechanisch widerstandsfähigen Material wie Metall oder Verbundwerkstoff besteht/bestehen, umfassend Füllstoffe und/oder Verstärkungsfasern.

3. Anordnung nach einem der vorstehenden Ansprüche,
**dadurch gekennzeichnet, dass** eine Hülse (7) mindestens eine Geometrie mit zylindrischem Rohrquerschnitt aufweist.

4. Anordnung nach einem der vorstehenden Ansprüche,
**dadurch gekennzeichnet, dass** ein Stift (7) mindestens zylindrisch und massiv ist.

5. Anordnung nach einem der vorstehenden Ansprüche,
**dadurch gekennzeichnet, dass** eine Hülse (7) mindestens oder ein Stift (7) mindestens einen Absatz aufweist, insbesondere zum Anliegen und Anschlagen an der Oberfläche der Struktur (3).

6. Anwendung einer Anordnung nach einem der vorstehenden Ansprüche, wobei die Verglasung statischen oder dynamischen Drücken ausgesetzt ist.

7. Anwendung einer Anordnung nach Anspruch 6, wobei die Verglasung eine Luftfahrtverglasung, insbesondere eine Flugzeug- oder Helikopterverglasung ist.

## Claims

1. Assembly consisting of a monolithic or laminated glazing (1), a structure (3) and optionally a frame (4), the glazing (1) being bolted through the structure or optionally pinched by the frame (4), which is itself bolted through the structure (3), wherein, in at least part of the periphery of the glazing of maximum flexibility or minimum stiffness with respect to the buckling phenomenon, said bolting is carried out by inserting at least one pin (7), and optionally by means of at least one bolt (2) inserted into a bushing (7) that is concentric to the bolt (2), and optionally by inserting at least one bushing (7), each bushing (7) and each pin (7) being mounted without play through the glazing (1) or through the frame (4), and without play through the structure (3), at least one of said at least one pin (7) being tapered and solid.

2. Assembly according to claim 1, **characterized in that** said at least one bushing (7) or said at least one pin (7) is made of a mechanically resistant rigid material such as metal or composite comprising reinforcing fillers and/or fibers.

3. Assembly according to one of the preceding claims, **characterized in that** at least one bushing (7) has a cylindrical tube cross-section geometry.

4. Assembly according to one of the preceding claims, **characterized in that** at least one pin (7) is cylindrical and solid.

5. Assembly according to one of the preceding claims, **characterized in that** at least one bushing (7) or at least one pin (7) has a shoulder, in particular for bearing and stopping against the surface of the structure (3).

6. Application of an assembly according to one of the preceding claims, wherein the glazing is subjected to static or dynamic pressures.

7. Application of an assembly according to claim 6, wherein the glazing is an aeronautical glazing, in particular an aircraft or helicopter glazing.
